# EUROPÄISCHE PATENTSCHRIFT

(11) **EP 0 470 397 B1**
(45) Veröffentlichungstag und Bekanntmachung des Hinweises auf die Patenterteilung: **01.03.1995**
(21) Anmeldenummer: 91111749.7
(22) Anmeldetag: 15.07.1991
(51) Int. Cl.: G01B 7/12, G01B 7/00

(54) **Messvorrichtung zur Überprüfung der Masse eines Werkstückes**
Device for measuring dimensions of a workpiece
Appareil de mesure des dimensions d'une pièce

(30) Priorität: 24.07.1990 DE 4023504; 06.11.1990 DE 9015229 U
(43) Veröffentlichungstag der Anmeldung: 12.02.1992
(73) Patentinhaber: Knäbel, Horst, Dipl.-Ing., D-40667 Meerbusch (DE)
(72) Erfinder: Knäbel, Horst, Dipl.-Ing., D-40667 Meerbusch (DE)
(74) Vertreter: Kossobutzki, Walter, Dipl.-Ing.(FH)

(56) Entgegenhaltungen:
- EP-A- 0 086 670
- CH-A- 352 148
- CH-A- 429 202
- DE-A- 2 951 532
- DE-A- 3 003 370
- FR-A- 997 296

## Beschreibung

Die Erfindung bezieht sich auf eine Vorrichtung zur Überprüfung der Maße eines mechanischen Werkstückes, bestehend aus einem in einem der Meßaufgabe angepaßten Träger einbaubaren, ein induktives oder kapazitives Feld erzeugenden Meßglied und einem demselben mit veränderbarem, die Meßgröße darstellenden Abstand zugeordneten, auf einer Meßfläche abstützbaren und bei einer Änderung des Abstandes zwischen Meßglied und einem Ablenkkörper eine Änderung des Induktions- oder Kapazitätsflusses bewirkenden Tastelementes.

Zur Überprüfung der Maße eines mechanischen Werkstückes sind Einrichtungen bekannt, die vielfach aus einem dornartigen Träger bestehen, in dessen Mantelfläche mindestens eine Meßvorrichtung eingebaut ist. Eine solche Meßvorrichtung besteht aus einem als Kugel ausgebildeten, anstellbaren Tastelement, dem eine Düse vorgeordnet ist, über die Druckluft ausströmt. Durch eine Veränderung des Abstandes des Tastelementes von der Druckluftdüse wird der Querschnitt des Ausströmspaltes verändert, was bei einem konstantem Luftdruck zwangsläufig eine Veränderung der ausströmenden Druckluftmenge pro Zeiteinheit zur Folge hat. Diese ausströmende Druckluftmenge ist dann ein Maß für die Stellung des Tastelementes und ergibt damit ein verwertbares Meßsignal. Bedarfsweise kann die Meßvorrichtung auch so ausgebildet sein, daß sich das kugel- bzw. halbkugelförmige Tastelement am freien Ende einer einseitig befestigten Feder befindet. Die Luftdüse kann dann im Bereich des Tastelementes oder mit Abstand davon im Bereich der Feder angeordnet sein, wobei die verlagerte Meßdüse die Möglichkeit gibt, Übersetzungen und Meßbereiche zu verändern. Derartige pneumatische Meßvorrichtungen haben den Vorteil, daß sie kleinbauend und durch die Druckluft selbstreinigend sind, d.h., eine besondere Abdeckung des Tastelementes ist nicht erforderlich. Zusätzlich ermöglichen derartige Meßvorrichtungen eine summierende Messung, d.h., der Luftstrom, der durch zwei sich gegenüberliegende bzw. vier sich kreuzweise gegenüberliegende Düsen strömt, wird als Summe gemessen und ausgewertet. Der Nachteil dieser pneumatischen Meßvorrichtungen besteht jedoch darin, daß sie gegenüber der Elektronik ein erheblich ungünstigeres Zeitverhalten besitzen und hohe Anforderungen an die Druckluft gestellt werden. Dabei muß der Druck der verwendeten Luft absolut konstant gehalten werden und die Luft frei von Öl sein. Bei Differenzdruckmeßverfahren werden zwar geringere Anforderungen an die Druckkonstanz gestellt, aber es wird dabei verhältnismäßig viel Luft verbraucht. Die Justage der Tastelemente und der Druckluftdüsen ist verhältnismäßig aufwendig, da sie hochwertige handwerkliche Feinarbeit erfordern. Zur Umwandlung eines pneumatischen Meßwertes in ein elektrisches Signal wird ein präziser Meßwertwandler benötigt, um das Signal weiter verarbeiten zu können. Der Meßbereich von pneumatischen Meßvorrichtungen ist äußerst gering und nur in einem engen Bereich ausreichend linear.

Die EP-A-0 086 670 offenbart Vorrichtungen zur Überprüfung der Maße von Bohrungen in Werkstücken, bei denen mehrere Meßvorrichtungen in einem als Meßdorn ausgebildeten Träger angeordnet sind. Jede Meßvorrichtung besteht hier aus einem Meßglied, welches auch als Geber bezeichnet werden kann und welches ein induktives Feld erzeugt. Dabei ist jedem Meßglied ein mit einem Ablenkkörper verbundes Tastelement zugeordnet, welches sich auf der Meßfläche des Werkstückes abstützt. Bei einer Veränderung der Lage des Tastelementes verändert sich der Abstand des Ablenkkörpers vom Meßglied, was hier eine Änderung des Induktionsflusses mit sich bringt.

Ähnliche Meßgeräte sind in der DE-A-2 951 532 oder der CH-A-429 202 offenbart.

In der CH-A-352 143 und der FR-A-997 296 ist nur der prinzipielle Aufbau von induktiven oder kapazitiven Meßvorrichtungen offenbart.

Der Erfindung liegt deshalb die Aufgabe zugrunde, eine Vorrichtung zur Überprüfung der Maße eines mechanischen Werkstückes zu schaffen, die vorgefertigt und problemlos in eine Aussparung eines der jeweiligen Meßaufgabe angepaßten Trägers eingebaut werden kann. Darüber hinaus soll die Meßvorrichtung kleinbauend und möglichst selbstreinigend sein, eine summierende Messung ermöglichen und eine hohe Meßfrequenz zulassen sowie ohne großen Aufwand ein elektrisches Meßsignal liefern, welches in Meßrechnern verwertet oder für statistische Zwecke verwendet werden kann.

Diese Aufgabe wird durch eine Vorrichtung gemäß Anspruch 1 gelöst.

Eine derartige Vorrichtung kann auf kleinstem Raum untergebracht und damit beispielsweise in eine Bohrungsmeßdorn eingesetzt werden, der bei einseitigem Einbau nur 6 mm Durchmesser und beim Einbau von zwei diagonal gegenüberliegenden Vorrichtungen bzw. Meßtastern nur 10 mm Durchmesser aufweisen muß. Der so bestückte, platten- oder hülsenförmige Grundkörper bzw. vorgefertigte Meßtaster kann in die verschiedenartigsten, der jeweiligen Meßaufgabe angepaßten Träger eingebaut werden. Mit verhältnismäßig wenig Druckluft, deren Druck auf einem niedrigen Wert gehalten werden kann und nicht konstant sein muß, ist bedarfsweise eine Reinigung der Vorrichtung bzw. des Meßtasters möglich. Bei der Anordnung von zwei sich diagonal gegenüberliegenden oder von vier sich kreuzweise gegenüberliegenden Meßtastern in einem derartigen Träger ist eine summierende Messung möglich. Je nach Bedarf kann die Vorrichtung bzw. der Meßtaster mit einem induktiven oder kapazitiven Meßsystem ausgerüstet sein. Der Meßbereich einer solchen Vorrichtung ist erheblich höher als bei einer pneumatischen Meßvorrichtung und darüber hinaus über einen größeren Bereich linear. Dies trifft insbesondere dann zu, wenn zwei Meßglieder zu einem sogenannten Differentialsystem zusammengeschlossen sind.

Weitere Merkmale einer Meßvorrichtung gemäß der Erfindung sind in den Ansprüchen 2 - 14 offenbart.

Die Erfindung wird nachfolgend anhand in einer Zeichnung dargestellter Ausführungsbeispiele näher erläutert. Dabei zeigen
- Fig. 1: einen Schnitt durch einen Meßdorn mit einem Meßtaster gemäß der Erfindung,
- Fig. 2: einen Schnitt durch eine weitere Ausbildung eines Meßtasters gemäß der Erfindung,
- Fig. 3: einen Schnitt durch eine andere Ausbildung eines erfindungsgemäßen Meßtasters,
- Fig. 4: die Ausbildung eines Meßgliedes und eines Ablenkkörpers eines Meßtasters und
- Fign. 5 - 7: weitere, der Fig. 4 entsprechende Darstellungen jeweils unterschiedlicher Ausbildungen von Meßglied und Ablenkkörper sowie die Anordnung von Induktionsspulen.

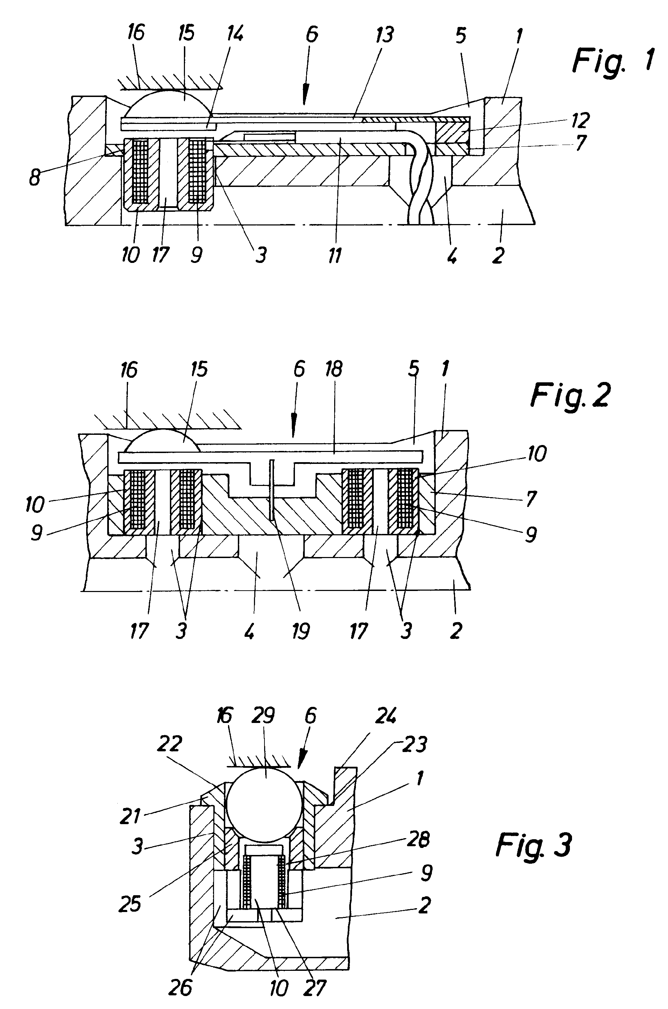

In der Fig. 1 der Zeichnung ist eine Vorrichtung gezeigt, die zur Ermittlung, insbesondere zur Überprüfung des Maßes einer verhältnismäßig engen und dazu noch tiefen Bohrung dient. Diese Vorrichtung besteht aus einem nur teilweise gezeichneten Träger 1, welcher beispielsweise als Meßdorn ausgebildet und in vorteilhafter Weise aus einem nicht magnetisierbaren Edelstahl gefertigt ist. Dieser Träger 1 hat einen Außendurchmesser ab etwa 6 mm und eine beliebige Länge. Der Träger 1 besitzt einen axialen Kanal 2, der an einem Ende offen und nach außen geführt ist. In diesen axialen Kanal 2 münden zwei radiale Bohrungen 3 und 4. Im Bereich der radialen Bohrungen 3,4 ist in die Mantelfläche des Trägers 1 eine axiale Öffnung bzw. Nut 5 eingearbeitet.

In dieser Öffnung bzw. Nut 5 ist nun der eigentliche Meßtaster 6 eingebaut. Dieser Meßtaster 6 besteht aus einem plattenartigen Grundkörper 7, der eine Bohrung 8 zur Aufnahme eines Meßgliedes 9,10 besitzt. Dabei wird das Meßglied 9,10 hier aus einer Induktionsspule 9 und einem Spulenkörper 10 gebildet. Der Spulenkörper 10 ragt in die Bohrung 3 des Trägers 1 und ist so auf dem plattenartigen Grundkörper 7 befestigt, daß seine beim Einbau der Induktionsspule 9 mit Spulenkörper 10 durchdrungene Stirnfläche nur geringfügig über die äußere Fläche des Grundkörpers 7 hinausragt. An die Induktionsspule 9 ist eine Leitung 11 angeschlossen, die über die Bohrung 4 in den Kanal 2 und von dort nach außen geführt ist.

Über einen Abstandhalter 12 ist an dem der Induktionsspule 9 abgewandten Ende des Grundkörpers 7 eine Blattfeder 13 befestigt, die so lang ausgebildet ist, daß sie die Induktionsspule 9 und den Spulenkörper 10 vollkommen überdeckt. An ihrem der Induktionsspule 9 zugewandten Ende ist die Blattfeder 13 mit einem als Anker wirkenden Ablenkkörper 14 aus magnetisierbarem Werkstoff versehen. Die gegenüberliegende Seite der Blattfeder 13 ist in diesem Bereich mit einem als Kugelabschnitt ausgebildeten Tastelement 15 aus nicht magnetisierbarem Werkstoff bestückt. Mit seiner äuβeren Begrenzungsfläche ragt dieses Tastelement 15 über die Kontur des dornartigen Trägers 1 hinaus. Im Bereich des Abstandhalters 12 ist die Leitung 11 mit dem Grundkörper 7 vergossen.

Bei der Erläuterung der Wirkungsweise der Vorrichtung gemäß Fig. 1 wird nun davon ausgegangen, daß der dornartige Träger 1 beispielsweise in eine Bohrung eingeführt wurde und das Tastelement 15 an der Innenwandung 16 der Bohrung, der eigentlichen Meßoberfläche, anliegt. Jetzt wird an die Induktionsspule 9 eine vorgegebene hochfrequente Wechselspannung angelegt und ein induktiver Widerstand entsteht. Die Induktivität der Induktionsspule 9 ändert sich nun mit dem Abstand des als Anker wirkenden Ablenkkörpers 14 von der Induktionsspule 9 bzw. dem Spulenkörper 10 und damit in Abhängigkeit von der Maßabweichung der Bohrung 16, die sich durch die Bewegung des Tastelementes 15 äußert und die über einen an sich bekannten Meßverstärker als Meßgröβe angezeigt und gegebenenfalls weiter verarbeitet werden kann.

Der Kanal 2 ist in vorteilhafter Weise an eine Druckluftleitung angeschlossen, über die Druckluft mit verhältnismäßig geringem Druck zugeführt wird. Diese zugeführte Druckluft tritt über eine im Spulenkörper 10 vorhandene Bohrung 17 aus und stellt sicher, daß die Nut 5 und insbesondere der Spalt zwischen dem Spulenkörper 10 und des Ablenkkörpers 14 von Schmutzpartikeln befreit bzw. freigehalten wird. Die über die Bohrung 17 des Spulenkörpers 9 austretende Druckluft drückt dabei das Tastelement 15 zusätzlich unterstützend gegen die Innenwandung 16 der Bohrung.

In Abänderung dieses Ausführungsbespieles ist es möglich, dem Meßglied 9,10 im Träger 1 ein weiteres, nicht dargestelltes Meßglied 9,10 zuzuordnen, wobei die beiden Induktionsspulen 9 der beiden Meßglieder 9,10 als sogenannte Halbbrücke verschaltet ist. Dabei hat das zweite Meßglied 9,10 insbesondere die Aufgabe, den Temperatureinfluß zu kompensieren.

In der Fig. 2 der Zeichnung ist ein weiterer Meßtaster 6 gezeigt, der ebenfalls in einen dornartigen Träger 1 mit einem axialen Kanal 2 und radialen Bohrungen 3,4 eingesetzt ist. Auch hier ist in dem Träger 1 eine Nut 5 eingearbeitet, die sich in axialer Richtung über drei Bohrungen 3,4 erstreckt und die den Meßtaster 6 aufnimmt.

Dieser Meßtaster 6 besteht ebenfalls aus einem plattenartigen Grundkörper 7, der jedoch anders ausgebildet ist und in diesem Ausführungsbeispiel zwei Induktionsspulen 9 mit Spulenkörper 10 aufnimmt. Beide Induktionsspulen 9 sind hier zu einer sogenannten Differentialdrossel verknüpft.

Über den beiden Spulenkörpern 10 mit den Induktionsspulen 9 befindet sich ein Doppelhebel 18, der hier über einen Federsteg 19, der fest in den Grundkörper 7 eingesetzt ist, schwenkbar gelagert bzw. als Wippe ausgebildet ist. Dieser Doppelhebel 18 bildet gleichzeitig den als Anker wirkenden Ablenkkörper für beide Induktionsspulen 9. An einem Ende des Doppelhebels 18 ist ebenfalls ein als kugelförmiger Abschnitt ausgebildetes Tastelement 15 befestigt, das auch hier die Wandung einer Bohrung 16 abtastet.

Im dargestellten Ausführungsbeispiel weist der Doppelhebel 18 an beiden Enden den gleichen stirnseitigen Abstand von den Induktionsspulen 9 auf, was bei einer entsprechenden Differentialdrossel dem Meßsignal "Null" entspricht.

Durch eine Schrägstellung in der Grundstellung des Doppelhebels 18 kann eine Vorspannung über den gesamten Meßbereich erzeugt werden, der dementsprechend dann von einem positiven bis hin zu einem negativen Meßsignal reicht. Liegt das Nennmaß der Bohrung 16 beim Ausgleich beider Induktivitäten, so kann bei der Messung die Abweichung vom Nennmaß der Bohrung erfaßt und weiter verarbeitet werden. Auch hier kann über den Kanal 2 Druckluft zugeführt werden, die über die Bohrungen 3 und 17 nach außen tritt und damit den Meßtaster 6 von Schmutz und dgl. freihält. Über die Bohrung 4 und den Kanal 2 wird auch hier die elektrische Leitung der Induktionsspule 9 nach außen geführt.

In der Fig. 3 der Zeichnung ist ein sehr einfach aufgebauter Meßtaster 6 gezeigt, der von einem Träger 1 mit einem Kanal 2 aufgenommen wird. In dem Träger 1 ist eine Bohrung 3 vorgesehen, in die der Meßtaster 6 eingebaut wird. Der Meßtaster 6 besteht hier aus einem hülsenartigen Grundkörper 21, der sich mit einem umlaufenden Kragen 22 auf der ebenen Fläche 23 einer Aussparung 24 in der Mantelfläche des Trägers 1 abstützt. In diesem Grundkörper 21 ist eine weitere Hülse 25 befestigt, die in den Kanal 2 ragt und mit am Umfang verteilten Aussparungen 26 versehen ist und eine Stirnfläche 27 aufweist. An dieser Stirnfläche 27 ist ein Spulenkörper 10 befestigt, der eine Induktionsspule 9 trägt. Zwischen der Induktionsspule 9 und der Innenwandung der Hülse 25 befindet sich ein freier Ringraum 28, über den durch den Kanal 2 eingeleitete Druckluft nach außen abströmen kann und dabei den Meßtaster 6 von Schmutzpartikeln freihält oder befreit.

Über der Hülse 25 und damit über der Drosselspule 9 ist eine Kugel 29 axial zur Hülse 25 angeordnet, die das anstellbare, als Anker wirkende Tastelement bildet. Diese Kugel 29 wird durch die zugeführte Druckluft gegen die Wandung 16 beispielsweise einer zu messenden Bohrung zum Anliegen gebracht. Mit einer Veränderung des Abstandes der Kugel 29 von der Induktionsspule 9 ändert sich auch hier die Induktivität, die damit ein Maß für die Maßabweichung der Bohrung ist und ebenfalls über einen Meßwandler angezeigt bzw. weiterverarbeitet werden kann. Über Nasen oder einen Verformungsgrat an der Austrittsöffnung des Grundkörpers 21 wird ein Herausdrücken der Kugel 29 verhindert ohne der durchströmenden Luft einen merklichen Widerstand zu bieten. Um Versetzungen der Kugel 29 zu vermeiden, die bei unhomogem magnetisierbarem Material zu Induktionsänderungen führen können, kann die Kugel 29 axial über dem Spulenkörper 10 oder radial über der Hülse 21 bzw. 25 gegen Abrollen gesichert werden, ohne daß ihre axiale Beweglichkeit beeinträchtigt wird.

Auch diesem Meßtaster 6 nach Fig. 3 ist zweckmäßigerweise eine zweite Spule mit Spulenträger und fest angebautem Ablenkkörper zur Temperaturkompensation zugeordnet.

In Abänderung der erläuterten Ausführungsbeispiele der Fign. 1 - 3 ist es möglich, die Drosselspule 9 des Meßgliedes 9,10 und die als Anker 14 wirkenden Ablenkkörper als Platten eines Kondensators auszubilden, wobei sich die Kapazität durch den Abstand zwischen den Platten verändert. Diese Kapazitätsänderung kann auch hierbei mittels Meßbrücken erfaßt werden.

Dabei ist es grundsätzlich auch möglich, die Kondensatorplatten des ortsfesten Meßglieds senkrecht auf den plattenartigen Grundkörper 7 aufzustellen und zwischen derselben die Kondensatorplatten oder Dielektrikumscheiben des Ablenkkörpers einzufügen, die sich dann mehr oder weniger überdecken. Gleiches gilt auch beim Aufbau eines Kondensators, der aus Hohlzylinder und Walze oder zylindrischen Ringen besteht. Die Luft aus dem Kanal 2 durchströmt dabei die Kondensatorplatten, wobei die Luft jedoch gereinigt und trocken sein sollte.

Werden die vorbeschriebenen Meßtaster 6 mit einem induktiven, durch eine Wechselspannung beaufschlagten Meßsystem ausgerüstet, ist es zur Erzielung eines hohen Meßsignals erforderlich, daß der Abstand zwischen dem Spulenkörper/Induktionsspule des Meßgliedes und dem Ablenkkörper möglichst klein gehalten wird. Ein geringer Abstand hätte zur Folge, daß die Linearitätsabweichung, d.h., die Änderung des aus dem induktiven Widerstand gebildeten Meßsignals im Verhältnis zum die Meßgröße bildenden Abstand, größer ist als bei einem größeren Abstand zwischen Spulenkörper/Induktionsspule, so daß dadurch der nutzbare Meßbereich eingeschränkt wird.

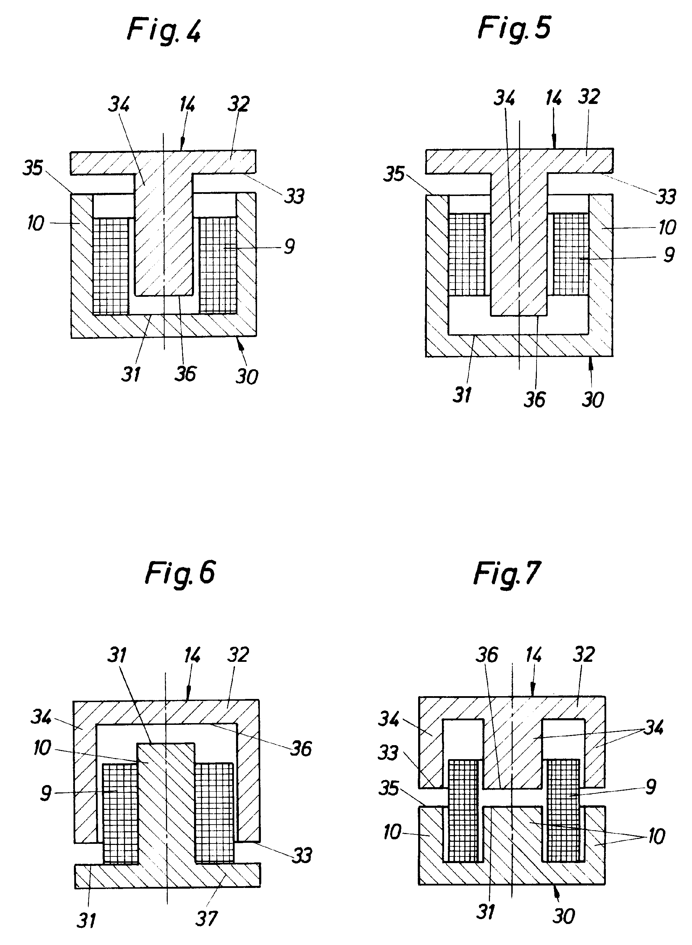

Durch die Ausbildungen gemäß den Fign. 4 - 5 wird nun erreicht, daß auch bei einem geringen Abstand zwischen Spulenkörper/Induktionsspule zur Erzielung eines hohen Meßsignals die Linearitätsabweichung über einen größeren Meßbereich abgesenkt werden kann. Dabei bilden sich weniger elektromagnetische Feldlinien quer zur Meßrichtung aus, von denen der Ablenkkörper auf seinem Weg in Meßrichtung je nach Spaltweite zwischen ihm und dem Spulenkörper eine sich stark verändernde Anzahl tangiert, indem der magnetische Widerstand über die Spalte und damit in Meßrichtung geringer ist als quer zu derselben.

In der Fig. 4 der Zeichnung ist von einem Meßtaster der Fign. 1 und 2 nur ein Meßglied 30, das aus dem Spulenkörper 10 und der Induktionsspule 9 besteht, und der Ablenkkörper 14 gezeigt.

Dabei ist nun der Spulenkörper 10 ebenfalls als an einem Ende geschlossene Hülse ausgebildet, in die die Induktionsspule 9 ortsfest eingesetzt ist. Die Induktionsspule 9 schließt sich auch hier direkt an die innere Grundfläche 31 des Spulenkörpers 10 an. Die Höhe der Induktionsspule 9 ist jedoch um ein vorgegebenes Maß kleiner ausgebildet als die innere, axiale Ausdehnung des hülsenartigen Spulenkörpers 10.

Der Ablenkkörper 14 besteht aus einer Grundplatte 32, die an ihrer dem Meßglied 30 zugewandten Grundfläche 33 einen vorzugsweise im Querschnitt kreisförmigen Vorsprung 34 besitzt, der in der gezeichneten Meßlage in die Induktionsspule 9 hineinragt. Bei diesen induktiven Meßtaster ist der Abstand zwischen der Grundfläche 33 des Ablenkkörpers 14 und der dieser zugeordneten (Ring-) Fläche 35 des Spulenkörpers 10 kleiner als der radiale Abstand zwischen der Innenwandung des Spulenkörpers 10 und der Außenwandung des Vorsprunges 34. Gleiches gilt auch für den axialen Abstand zwischen der Grundfläche 31 des Spulenkörpers 10 und der freien Stirnfläche 36 des Vorsprunges 34. Dadurch ist der quer zur Meßrichtung verlaufende induktive Widerstand größer als der in Meßrichtung verlaufende induktive Widerstand.

Das Ausführungsbeispiel der Fig. 5 stimmt weitgehend mit dem Ausführungsbeispiel der Fig. 4 überein. Daher wurden für gleiche Teile auch die gleichen Bezugszahlen verwendet. Der Unterschied bei diesem Ausführungsbeispiel besteht lediglich darin, daß hier die Induktionsspule 9 nicht an der inneren Grundfläche des Spulenkörpers 10 aufliegt, sondern mit Abstand von derselben angeordnet ist. Die vorerwähnten Maßverhältnisse sind auch hier gegeben. Bei dieser Ausbildung ist die radiale Beeinflussung der Induktionsspule 9 auf den durch Veränderung der Meßgröße beeinflußbaren induktiven Widerstand aufgehoben, der durch die Luftspalte zwischen der Grundfläche 33 und der Ringfläche 35 sowie zwischen der Grundfläche 31 und der Stirnfläche 36 entsteht. Damit wird ein weitgehend linearer Zusammenhang zwischen der dem Meßweg entsprechenden Spalthöhe und dem induktiven Widerstand, der dem Meßsignal entspricht, geschaffen.

Auch das Ausführungsbeispiel der Fig. 6 stimmt in seinem grundsätzlichen Aufbau mit dem Ausführungsbeispiel der Fig. 4 überein. Deshalb wurden auch hier für gleiche Teile gleiche Bezugszahlen verwendet. Der Unterschied zu dem Ausführungsbeispiel der Fig. 4 besteht hier darin, daß der Spulenkörper 10 nicht als einseitig geschlossene Hülse, sondern als ein auf einem plattenartigen Grundkörper 37 angeordneter Zapfen ausgebildet ist. Hier stützt sich die Induktionsspule 9 ebenfalls direkt auf dem Grundkörper 31 ab. Im Gegensatz dazu besitzt der Ablenkkörper 14 hier keinen zentralen Vorsprung 34, sondern einen hülsen- bzw. ringartigen Vorsprung 34, der mit Abstand die Induktionsspule 9 umschließt.

Das Ausführungsbeispiel der Fig. 7 stellt schließlich eine Kombination der Ausführungsbeispiele der Fign. 4 und 6 dar. Für in ihrer Funktion gleiche Teile wurden daher die gleichen Bezugszahlen verwendet. Hier besitzt einerseits der Spulenkörper 10 ein hülsen- bzw. ringartiges Teil und ein zentrales Teil, zwischen denen die Induktionsspule 9 angeordnet ist. Die Induktionsspule 9 ragt aus dem Spulenkörper 10 heraus. Auch der Ablenkkörper 14 besitzt einen hülsen- bzw. ringförmigen und einen zapfenartigen Vorsprung 34. Zwischen diese Vorsprünge 34 ragt die Induktionsspule 9 hinein. Auch bei diesem Ausführungsbeispiel werden die bei dem Ausführungsbeispiel der Fig. 4 erläuterten Maßverhältnisse beibehalten.

In Ergänzung der Ausführungsbeispiele nach den Fign. 4 - 7 ist es möglich, die nicht vom Spulenkörper 10 abgedeckten Stirnflächen der Induktionsspule 9 mit Scheiben aus einem diamagnetischen Werkstoff, z.B. Kupfer, Silber oder Blei, abzudecken. Dadurch werden auch die sonst noch quer verlaufenden Feldlinien an den Stirnflächen der Induktionsspule 9 auf die radialen Flächen der Vorsprünge 34 hingeleitet.

## Patentansprüche

1. Vorrichtung zur Überprüfung der Maße eines mechanischen Werkstückes, bestehend aus einem in einem der Meßaufgabe angepaßten Träger einbaubaren, ein induktives oder kapazitives Feld erzeugenden Meßglied und einem demselben mit veränderbarem, die Meßgröße darstellenden Abstand zugeordneten, auf einer Meßfläche abstützbaren und bei einer Änderung des Abstandes zwischen Meßglied und einem Ablenkkörper eine Änderung des Induktions- oder Kapazitätsflusses bewirkenden Tastelement,
dadurch gekennzeichnet,
daß nur ein Ablenkkörper (14,29) mit nur einem Tastelement (15,29) vorgesehen ist, daß das Meßglied (9) eine Stirnfläche aufweist, die dem Ablenkkörper (14,29) gegenüberliegend im Bereich einer dem Ablenkkörper (14,29) zugewandten Stirnfläche eines platten- oder hülsenartigen Grundkörpers (7,21) angeordnet ist und daß das Meßglied (9,10), der Ablenkkörper (14,29) und das Tastelement (15,29) sowie der Grundkörper (7,21) einen in einer Aussparung des Trägers (1) einbaubaren Meßtaster (6) bilden.

2. Meßvorrichtung nach Anspruch 1,
dadurch gekennzeichnet,
daß dem Meßglied (9,10) ein zweites Meßglied (9,10) zur Bildung einer Halbbrücke zuordenbar ist.

3. Meßvorrichtung nach Anspruch 2,
dadurch gekennzeichnet,
daß das zweite Meßglied (9,10) mit Abstand vom ersten Meßglied (9,10) im Träger (1) angeordnet ist.

4. Meßvorrichtung nach Anspruch 2,
dadurch gekennzeichnet,
daß das zweite Meßglied (10) ebenfalls auf dem Grundkörper (7) angeordnet ist, und der Ablenkkörper (18) als Doppelhebel ausgebildet ist.

5. Meßvorrichtung nach Anspruch 4,
dadurch gekennzeichne,
daß der Doppelhebel zwischen den beiden Meßgliedern gelagert ist und an dessen einem Ende das Tastelement (15) angeordnet ist.

6. Meßvorrichtung nach mindestens einem der Ansprüche 1 - 5,
dadurch gekennzeichnet,
daß das Meßglied (9,10) als Induktionsspule (9) und der Ablenkkörper (14) als Anker ausgebildet ist.

7. Meßvorrichtung nach Anspruch 6,
dadurch gekennzeichnet,
daß der Ablenkkörper als Tastkugel (29) ausgebildet ist.

8. Meßvorrichtung nach mindestens einem der Ansprüche 1 - 6,
dadurch gekennzeichnet,
daß der Ablenkkörper (14) auf dem dem Meßglied (9,10) abgewandten, freien Ende einer kragarmartig eingespannten Blattfeder (13) befestigt ist, die an ihrer dem Meßglied (9,10) zugewandten Seite das als Kugelabschnitt ausgebildete Tastelement (15) trägt.

9. Meßvorrichtung nach Anspruch 8,
dadurch gekennzeichnet,
daß die Blattfeder (13) selbst als Ablenkkörper ausgebildet ist.

10. Meßvorrichtung nach Anspruch 1,
dadurch gekennzeichnet,
daß das Meßglied (9,10) und der Ablenkkörper (14) jeweils als Kondensatorplatte ausgebildet sind.

11. Meßvorrichtung nach Anspruch 10,
dadurch gekennzeichnet,
daß das Meßglied (9,10) durch zwei oder mehrere Kondensatorplatten und der Ablenkkörper (14) aus einer der Anzahl der Zwischenräume entsprechenden Anzahl von Kondensator- oder Dielektrikumplatten gebildet ist, die parallel zwischen den Kondensatorplatten und senkrecht zum Grundkörper (7) angeordnet sind.

12. Meßvorrichtung nach mindestens einem der Ansprüche 1 - 11,
dadurch gekennzeichnet,
daß der Ablenkkörper (14) an seiner dem Meßglied (9,10) zugewandten Fläche (33) mindestens einen zapfen- oder hülsen- bzw. ringförmigen Vorsprung (34) aufweist, der sich in und/oder um das als Induktionsspule (9) ausgebildete Meßglied (9,10) erstreckt und dessen Querschnitt dem inneren und/oder äußeren Querschnitt der Induktionsspule (9) entsprechend ausgebildet ist.

13. Meßvorrichtung nach Anspruch 12,
dadurch gekennzeichnet,
daß die Induktionsspule mit einem Spulenkörper versehen ist, wobei der Ablenkkörper und der Spulenkörper derart ausgebildet sind,
daß der stirnseitige Abstand zwischen Spulenkörper (10) und dem Ablenkkörper (14) kleiner ist als der stirnseitige Abstand zwischen der Induktionsspule (9) und dem Ablenkkörper (14).

14. Meßvorrichtung nach Anspruch 12 oder 13,
dadurch gekennzeichnet,
daß die Induktionsspule mit einem Spulenkörper versehen ist, wobei der Ablenkkörper und der Spulenkörper derart ausgebildet sind,
daß der radiale Abstand zwischen dem zapfen- oder hülsen- bzw. ringförmigen Vorsprung (34) des Ablenkkörpers (14) zur Innenwandung des Spulenkörpers (10) größer ist als der axiale Abstand jeder dem Spulenkörper (10) zugewandten Stirnfläche des Ablenkkörpers (14,34) zu den ihm gegenüberliegenden Flächen des Spulenkörpers (10).

## Claims

1. Device for checking the dimensions of a mechanical workpiece, consisting of a measuring element which can be inserted into a holder adapted to the measuring task and generates an inductive or capacitive field and a sensing element associated therewith at a variable distance representing the measured quantity which can be supported on a measuring surface and varies the magnetic or capacitive flux in the event of a variation in the distance between the measuring element and a deflector body, characterised in that only one deflector body (14, 29) is provided with only one sensing element (15, 29), that the measuring element (9) has an end face arranged opposite the deflector body (14, 29) in the region of an end face of a plate-like or tubular base (7, 21) directed towards the deflector body (14, 29) and that the measuring element (9, 10), the deflector body (14, 29), the sensing element (15, 29) and the base (7, 21) form a measuring probe (6) which can be inserted into a recess in the holder (1).

2. Measuring device according to claim 1, characterised in that a second measuring element (9, 10) can be associated with the measuring element (9, 10) in order to form a half bridge.

3. Measuring device according to claim 2, characterised in that the second measuring element (9, 10) is arranged at a distance from the first measuring element (9, 10) in the holder (1).

4. Measuring device according to claim 2, characterised in that the second measuring element (10) is also arranged on the base (7) and the deflector body (18) is a double lever.

5. Measuring device according to claim 4, characterised in that the double lever is mounted between the two measuring elements (9) and the sensing element (15) is arranged at one end thereof.

6. Measuring device according to at least one of claims 1 - 5, characterised in that the measuring element (9, 10) is an induction coil (9) and the deflector body (14) is an armature.

7. Measuring device according to claim 6, characterised in that the deflector body is a sensing ball (29).

8. Measuring device according to at least one of claims 1 - 6, characterised in that the deflector body (14) is secured to the free end of a cantilevered leaf spring (13) remote from the measuring element (9, 10), said leaf spring carrying the sensing element (15) in the form of a spherical segment on its side directed towards the measuring element (9, 10).

9. Measuring device according to claim 8, characterised in that the leaf spring (13) is itself a deflector body.

10. Measuring device according to claim 1, characterised in that the measuring element (9, 10) and the deflector body (14) are each capacitor plates.

11. Measuring device according to claim 10, characterised in that the measuring element (9, 10) is formed by two or more capacitor plates and the deflector body (14) by a number of capacitor or dielectric plates corresponding to the number of intermediate spaces arranged in parallel between the capacitor plates and perpendicular to the base (7).

12. Measuring device according to at least one of claims 1 - 11, characterised in that the deflector body (14) is provided on its face (33) directed towards the measuring element (9, 10) with at least one conical or tubular or annular projection (34) which extends in and/or around the measuring element (9, 10) in the form of an induction coil (9) and the cross section of which corresponds to the internal and/or external cross section of the induction coil (9).

13. Measuring device according to claim 12, characterised in that the induction coil is provided with a coil body, the deflector body and the coil body being designed in such a manner that the end distance between the coil body (10) and the deflector body (14) is smaller than the end distance between the induction coil (9) and the deflector body (14).

14. Measuring device according to claim 12 or claim 13, characterised in that the induction coil is provided with a coil body, the deflector body and the coil body being designed in such a manner that the radial distance between the conical or tubular or annular projection (34) of the deflector body (14) and the inner wall of the coil body (10) is greater than the axial distance between each end face of the deflector body (14, 34) directed towards the coil body (10) and the faces of the coil body (10) situated opposite.

## Revendications

1. Dispositif de vérification des cotes d'une pièce à usiner mécanique, constitué d'un organe de mesure à monter dans un support adapté à la tâche de mesure, produisant un champ inductif ou capacitif et d'un élément de palpage associé à celui-ci avec distance variable, représentant la grandeur de mesure, à poser sur une surface de mesure et provoquant une variation du flux d'induction ou du flux de capacité, en cas de variation de la distance entre l'organe de mesure et un corps de déviation, caractérisé en ce qu'il est prévu seulement un corps de déviation (14, 29) avec seulement un élément de palpage (15, 29), en ce que l'organe de mesure (9) présente une face frontale qui fait face au corps de déviation (14, 29) dans la région d'une face frontale, tournée vers le corps de déviation (14, 29) d'un corps de base (7, 21) en forme de plaque ou de douille et en ce que l'organe de mesure (9, 10), le corps de déviation (14, 29) et l'élément de palpage (15, 29) ainsi que le corps de base (7, 21) forment un palpeur de mesure (6) à monter dans une découpe du support (1).

2. Dispositif de mesure selon la revendication 1, caractérisé en ce qu'à l'organe de mesure (9, 10) peut être associé un deuxième organe de mesure (9, 10) pour former un demi-pont.

3. Dispositif de mesure selon la revendication 2, caractérisé en ce que le deuxième organe de mesure (9, 10) est placé à distance du premier organe de mesure (9, 10), dans le support (1).

4. Dispositif de mesure selon la revendication 2, caractérisé en ce que le deuxième organe de mesure (10) est également placé sur le corps de base (7) et le corps de déviation (18) est réalisé sous la forme d'un double levier.

5. Dispositif de mesure selon la revendication 4, caractérisé en ce que le double levier est monté entre les deux organes de mesure et l'élément de palpage (15) est placé à l'une de ses extrémités.

6. Dispositif de mesure selon l'une au moins des revendications 1 à 5, caractérisé en ce que l'organe de mesure (9, 10) est une bobine d'induction (9) et le corps de déviation (14) est un induit.

7. Dispositif de mesure selon la revendication 6, caractérisé en ce que le corps de déviation est une bille de palpage (9).

8. Dispositif de mesure selon l'une au moins des revendications 1 à 6, caractérisé en ce que le corps de déviation (14) est fixé sur l'extrémité libre, tournée à l'opposé de l'organe de mesure (9, 10), d'un ressort à lames (13) serré à la manière d'un bras en porte-à-faux, qui sur son côté tourné vers l'organe de mesure (9, 10) porte l'élément de palpage (15) réalisé sous la forme d'une portion de bille.

9. Dispositif de mesure selon la revendication 8, caractérisé en ce que le ressort à lames (13) lui-même est un corps de déviation.

10. Dispositif de mesure selon la revendication 1, caractérisé en ce que l'organe de mesure (9, 10) et le corps déviation (14) sont réalisés chacun sous la forme d'une plaque de condensateur.

11. Dispositif de mesure selon la revendication 10, caractérisé en ce que l'organe de mesure (9, 10) est formé par deux plaques de condensateur ou plus et le corps de déviation (14) est formé par un nombre de plaques de condensateur ou de diélectrique correspondant au nombre d'espaces intermédiaires, lesquelles plaques sont disposées parallèlement entre les plaques de condensateur et perpendiculairement au corps de base (7).

12. Dispositif de mesure selon l'une au moins des revendications 1 à 11, caractérisé en ce que le corps de déviation (14) présente, sur sa surface (33) tournée vers l'organe de mesure (9, 10), au moins une saillie (34) en forme de tenon ou de douille ou annulaire, qui s'étend dans et/ou autour de l'organe de mesure (9, 10) réalisé sous la forme d'une bobine d'induction (9) et dont la section transversale correspond à la section transversale intérieure et/ou extérieure de la bobine d'induction (9).

13. Dispositif de mesure selon la revendication 12, caractérisé en ce que la bobine d'induction est pourvue d'un corps de bobine, le corps de déviation et le corps de la bobine étant conçus de manière que la distance frontale entre le corps de bobine (10) et le corps déviation (14) soit inférieure à la distance frontale entre la bobine d'induction (9) et le corps de déviation (14).

14. Dispositif de mesure selon la revendication 12 ou 13, caractérisé en ce que la bobine d'induction est pourvue d'un corps de bobine, le corps de déviation et le corps de la bobine étant conçus de manière que la distance radiale entre la saillie (34) en forme de tenon ou de douille ou annulaire du corps de déviation (14) et la paroi intérieure du corps de bobine (10) soit supérieure à la distance axiale de chaque face frontale, tournée vers le corps de bobine (10), du corps de déviation (14, 34), par rapport aux surfaces lui faisant face du corps de bobine (10).
